# EUROPEAN PATENT APPLICATION

(11) **EP 3 671 678 A1**
(43) Date of publication of application: **24.06.2020**
(21) Application number: 18932977.4
(22) Date of filing: 28.09.2018
(51) Int. Cl.: G08B 5/00, G08B 23/00

(54) **NOTIFICATION DEVICE AND NOTIFICATION SYSTEM**

(71) Applicant: Patlite Corporation, Osaka-shi, Osaka 541-0056 (JP)
(72) Inventor: SHIGEMATSU, Daisuke, Osaka 5410056 (JP); YOSHIKAWA, Takayuki, Osaka 5410056 (JP)
(74) Representative: Witte, Weller & Partner Patentanwälte mbB
(86) International application number: PCT/JP2018/036491
(87) International publication number: WO 2020/065985

(57) **Abstract**

A notification device 1 includes a first input portion 11 to which first information is input, a second input portion 12 to which second information is input, a display portion 4 to variably display information, and a control portion 10. The control portion 10 controls the display portion 4 to display information corresponding to the first information with a first display attribute and to display information corresponding to the second information with a second display attribute different from the first display attribute.

## Description

### Technical Field

The present invention relates to a notification device provided with a display portion to display information and a notification system including such a notification device.

### Background Art

Patent Literature 1 discloses a signal column configured by integrating a plurality of optical signal elements. The signal column displays the operating state of factory equipment by an optical signal. The signal column assumes a role in notifying abnormalities of the factory equipment.

### Patent Literature

Patent Literature 1: Japanese Patent Application Publication No. 2005-346697

### Summary of Invention

### Technical Problem

A person who has seen an indication of the signal column of Patent Literature 1 can grasp the fact that an abnormality has occurred and details of the abnormality. However, additional information such as the status of response to the abnormality cannot be grasped. If such additional information can be displayed, the convenience can be further improved.

Accordingly, a preferred embodiment of the present invention provides a notification device capable of displaying more diverse information thereby further improving the convenience, and a notification system including such a notification device.

### Solution to Problem

The present invention provides a notification device including a first input portion to which first information is input, a second input portion to which second information is input, a display portion to variably display information, and a control portion. The control portion controls the display portion to display information corresponding to the first information with a first display attribute and to display information corresponding to the second information with a second display attribute different from the first display attribute.

With this configuration, upon input of the first information to the first input portion, the control portion of the notification device controls the display portion to display information corresponding to the first information with the fist display attribute. As a result, a person who has seen the information displayed on the display portion can grasp this information. On the other hand, upon input of the second information to the second input portion, the control portion controls the display portion to display information corresponding to the second information with the second display attribute different from the first display attribute. As a result, a person who has seen the information displayed on the display portion can grasp further additional information. From the above results, the notification device allows for the indication of more diverse information, and this can further improve the convenience.

In a specific example, information indicating the occurrence of an abnormality of a mechanical device and its details may be input to the first input portion as the first information. With this configuration, upon input of the first information to the first input portion with the occurrence of an abnormality in a mechanical device associated with the notification device, the control portion of the notification device controls the display portion to display information corresponding to the first information with the first display attribute. As a result, a person who has seen the information displayed on the display portion can grasp the occurrence of the abnormality and its details.

In a further specific example, an operator such as a worker responding to the abnormality of the mechanical device may input information indicating an arrival of the worker to the second input portion as the second information. The control portion then controls the display portion to display information corresponding to the second information with the second display attribute different from the first display attribute. As a result, a person who has seen the information displayed on the display portion can grasp that a response to the abnormality has been started. As described above, the notification device can notify not only the occurrence of an abnormality and its details but also the status of response to the abnormality.

In a preferred embodiment of the present invention, the control portion sets an attribute value of the first display attribute to a normal value or an abnormal value according to an input of the first information to the first input portion. The control portion sets an attribute value of the second display attribute to an initial value or a completion value according to an input of the second information to the second input portion. When a state in which the attribute value of the first display attribute is the normal value and the attribute value of the second display attribute is the completion value continues for a first time, the control portion changes the attribute value of the second display attribute from the completion value to the initial value.

With this configuration, upon input of the first information indicating, for example, the occurrence of an abnormality in the mechanical device to the first input portion, the control portion sets the attribute value of the first display attribute to the abnormal value, and thereby can display information indicating the abnormal state on the display portion. As a result, a person who has seen the information displayed on the display portion can grasp the occurrence of the abnormality. On the other hand, upon input of the first information indicating, for example, that the mechanical device is normal to the first input portion, the control portion sets the attribute value of the first display attribute to the normal value, and thereby can display information indicating the normal state on the display portion. As a result, a person who has seen the information displayed on the display portion can grasp that there exists no abnormality.

On the other hand, by setting the attribute value of the second display attribute to the initial value, the control portion can display information indicating, for example, that a response to the mechanical device (not necessarily a response to an abnormality) is not performed on the display portion. As a result, a person who has seen the information displayed on the display portion can grasp that a response to the mechanical device is currently not being performed. For example, when a person who has completed some action on the mechanical device inputs the second information to the second input portion, the control portion sets the attribute value of the second display attribute to the completion value, and thereby can display information indicating that the response to the mechanical device has been completed on the display portion. As a result, a person who has seen the information displayed on the display portion can grasp that the response to the mechanical device has been completed.

When the state in which the attribute value of the first display attribute is the normal value and the attribute value of the second display attribute is the completion value continues for the first time, the control portion changes the attribute value of the second display attribute from the completion value to the initial value. As a result, a person who has seen the information displayed on the display portion, for example, during a period from the completion of the response to the mechanical device to the first time can know that the action on the mechanical device has been appropriately taken and can confirm that a response is no longer required. The first time is preferably set to have an appropriate length according to such a specific purpose.

In a preferred embodiment of the present invention, when a state in which the attribute value of the first display attribute is the abnormal value and the attribute value of the second display attribute is the completion value continues for a second time, the control portion changes the attribute value of the second display attribute from the completion value to the initial value.

With this configuration, for example, when the response to the abnormality of the mechanical device has been performed but the abnormality has not been eliminated, the control portion leaves the attribute value of the first display attribute at the abnormal value and changes the attribute value of the second display attribute from the completion value to the initial value. As a result, that the response to the abnormality etc., has ended unsuccessfully can be notified during the second time, and that the abnormality is not eliminated yet can be notified thereafter. Thus, the second time is preferably set to have an appropriate length according to such a specific purpose.

In a preferred embodiment of the present invention, the abnormal value includes a first abnormal value and a second abnormal value, and the second time includes a second A time according to the first abnormal value and a second B time according to the second abnormal value. When a state in which the attribute value of the first display attribute is the first abnormal value and the attribute value of the second display attribute is the completion value continues for the second A time, the control portion changes the attribute value of the second display attribute from the completion value to the initial value. When a state in which the attribute value of the first display attribute is the second abnormal value and the attribute value of the second display attribute is the completion value continues for the second B time, the control portion changes the attribute value of the second display attribute from the completion value to the initial value.

Upon input of the first information indicating, for example, the occurrence of a first abnormality in the mechanical device to the first input portion, the control portion may set the attribute value of the first display attribute to the first abnormal value and thereby display information indicating the occurrence of the first abnormality on the display portion. As a result, a person who has seen the information displayed on the display portion can grasp the occurrence of the first abnormality. Further, upon input of the first information indicating the occurrence of a second abnormality, which is another abnormality, in the mechanical device to the first input portion, the control portion may set the attribute value of the first display attribute to the second abnormal value and thereby display information indicating the occurrence of the second abnormality on the display portion. As a result, a person who has seen the information displayed on the display portion can grasp the occurrence of the second abnormality. For example, when a response to the first abnormality has been performed and the attribute value of the second display attribute has become the completion value but the first abnormality has not been eliminated, the control portion stands by for an elapse of the second A time, leaves the attribute value of the first display attribute at the first abnormal value, and changes the attribute value of the second display attribute from the completion value to the initial value. As a result, that the response to the first abnormality has ended unsuccessfully can be displayed during the second A time, and that the first abnormality is not eliminated yet can be displayed thereafter. Similarly, when a response to the second abnormality has been performed and the attribute value of the second display attribute has become the completion value but the second abnormality has not been eliminated, the control portion stands by for an elapse of the second B time, leaves the attribute value of the first display attribute at the second abnormal value, and changes the attribute value of the second display attribute from the completion value to the initial value. As a result, that the response to the second abnormality has ended unsuccessfully can be displayed during the second B time, and that the second abnormality is not eliminated yet can be displayed thereafter. In this way, the type of abnormality and the status of the response thereto can be displayed.

In a preferred embodiment of the present invention, the attribute value of the second display attribute includes an intermediate value different from the initial value and the completion value. Upon input of the second information to the second input portion with the attribute value of the second display attribute being the initial value, the control portion changes the attribute value of the second display attribute from the initial value to the intermediate value. Upon input of the second information to the second input portion with the attribute value of the second display attribute being the intermediate value, the control portion changes the attribute value of the second display attribute from the intermediate value to the completion value. Upon input of the second information to the second input portion with the attribute value of the second display attribute being the completion value, the control portion changes the attribute value of the second display attribute from the completion value to the initial value.

With this configuration, by the second information repeatedly input to the second input portion, the control portion changes the attribute value of the second display attribute from the initial value to the intermediate value, from the intermediate value to the completion value, and from the completion value to the initial value. That is, the attribute value of the second display attribute cyclically changes in order of the initial value, the intermediate value, and the completion value according to the input of the second information. Since the second display attribute changes accordingly, the second information can be displayed in three types of modes.

In a specific example, by setting the attribute value of the second display attribute to the intermediate value, the control portion may display information indicating that a response to the mechanical device has been started on the display portion. In this case, if the attribute value of the second display attribute is the initial value, for example, when an abnormality has occurred in the mechanical device, a person who has seen the information displayed on the display portion can grasp that no response to the abnormality has been performed. When, for example, an operator such as a worker in charge inputs the second information to the second input portion, the attribute value of the second display attribute changes from the initial value to the intermediate value. Accordingly, a person who has seen the information displayed on the display portion can grasp that a response to the abnormality has been started. When the worker etc., having completed the response to the abnormality inputs the second information to the second input portion, the attribute value of the second display attribute changes from the intermediate value to the completion value. Accordingly, a person who has seen the information displayed on the display portion can grasp that the response to the abnormality has been completed. For example, when the worker etc., having completed the response to the abnormality inputs the second information to the second input portion, the attribute value of the second display attribute changes from the completion value to the initial value. Accordingly, a person who has seen the information displayed on the display portion can grasp that the response to the mechanical device is currently not being performed. There may be a case in which the worker in charge has started to take action for the abnormality of the mechanical device but the action ends unsuccessfully. In such a case, the worker in charge returns the attribute value of the second display attribute to the initial value by an input of the second information. As a result, the notification device can notify that a response to the abnormality is required.

In a preferred embodiment of the present invention, when a state in which the attribute value of the first display attribute is the normal value and the attribute value of the second display attribute is the intermediate value continues for a third time, the control portion changes the attribute value of the second display attribute from the intermediate value to the completion value.

When the worker inputs the second information to the second input portion, for example, at the time of starting maintenance of the mechanical device in which an abnormality has occurred, the attribute value of the second display attribute changes from the initial value to the intermediate value. Even if the worker having completed the action does not input the second information to the second input portion, the control portion changes the attribute value of the second display attribute from the intermediate value to the completion value when a state in which the attribute value of the first display attribute is the normal value continues for the third time. As a result, that the action is being performed can be displayed during the third time, and that the maintenance of the mechanical device has been completed can be displayed thereafter.

In a preferred embodiment of the present invention, the attribute value of the second display attribute includes a confirmation value different from the initial value, the completion value, and the intermediate value. When the attribute value of the second display attribute is the confirmation value, the control portion controls the display portion to be a non-display state. When the second information is input to the second input portion at intervals exceeding a predetermined time, the control portion sequentially changes the attribute value of the second display attribute among the initial value, the intermediate value, and the completion value. When the second information is input to the second input portion at intervals within the predetermined time, the control portion sequentially changes the attribute value of the second display attribute among the initial value, the intermediate value, the completion value, and the confirmation value.

With this configuration, when the second information is input to the second input portion at intervals exceeding the predetermined time, the control portion sequentially (for example, cyclically) changes the attribute value of the second display attribute among the initial value, the intermediate value, and the completion value. On the other hand, when the second information is input to the second input portion at intervals within the predetermined time, the control portion sequentially (for example, cyclically) changes the attribute value of the second display attribute among the initial value, the intermediate value, the completion value, and the confirmation value. When the attribute value of the second display attribute is changed to the confirmation value, the display portion enters the non-display state.

For example, when an abnormality occurs in the mechanical device, the worker in charge inputs the second information to the second input portion at the time of starting the action. The attribute value of the second display attribute then changes from the initial value to the intermediate value. When the worker finishes the action and inputs the second information to the second input portion again, the attribute value of the second display attribute changes from the intermediate value to the completion value. Thus, the status of the response to the abnormality of the mechanical device can be displayed by the attribute value of the second display attribute.

The worker having started the action may not be able to eliminate the abnormality of the mechanical device. In this case, the attribute value of the second display attribute is preferably returned to the initial value. This is because this allows for notifying that the action on the abnormality of the mechanical device is not completed yet. In such a case, the worker can change the attribute value of the second display attribute to the initial value by inputting the second information to the second input portion. The attribute value of the second display attribute can be set to the initial value by repeatedly inputting the second information to the second input portion. At that time, the attribute value of the second display attribute is returned to the initial value through the confirmation value by executing the input of the second information at intervals within the predetermined time. When the attribute value of the second display attribute is the confirmation value, the display portion assumes the non-display state. Thus, the operator can know that the attribute value of the second display attribute can be set to the initial value by inputting the second information next. That is, the attribute value of the second display attribute can be confirmed by the non-display state of the display portion.

In a preferred embodiment of the present invention, when a state in which the attribute value of the second display attribute is the confirmation value continues for a fourth time, the control portion changes the attribute value of the second display attribute from the confirmation value to the initial value.

With this configuration, when the display portion is in the non-display state, the control portion changes the attribute value of the second display attribute from the confirmation value to the initial value and thereby displays information according to the initial value on the display portion, even if the second information is not input to the second input portion. This can prevent the non-display state from continuing for a long time.

In a preferred embodiment of the present invention, the first display attribute is at least one of a display color and a display position, and the second display attribute is a lighting pattern.

With this configuration, on the display portion of the notification device, information corresponding to the first information can be displayed by at least one of the display color and the display position, and information corresponding to the second information can be displayed by the lighting pattern. Accordingly, for example, a person who has seen the display portion can grasp the occurrence of an abnormality and its details by at least one of the display color and the display position on the display portion and can grasp the status of response to the abnormality by the lighting pattern of the display portion.

In a preferred embodiment of the present invention, the first information is information output from a control device controlling a mechanical device to which the notification device corresponds, and the second information is information input to the second input portion by an operation of an operation portion by an operator.

With this configuration, for example, when an abnormality occurs in the mechanical device, the first information on the occurrence of the abnormality and its details is output from the control device controlling this mechanical device and input to the first input portion of the notification device. On the other hand, for example, when the abnormality is eliminated in the mechanical device, the first information on the elimination of the abnormality is output from the control device and input to the first input portion. Since the control portion of the notification device displays information corresponding to such first information on the display portion, a person who has seen the information displayed on the display portion can grasp the occurrence of the abnormality and its details and the elimination of the abnormality. For example, when an operator such as a worker responding to the abnormality having occurred in the mechanical device operates the operation portion, the second information is input to the second input portion of the notification device. In this case, the second information can indicate the status of the response to the abnormality. Since the control portion of the notification device displays information corresponding to the input second information on the display portion, a person who has seen the information displayed on the display portion can grasp the status of the response to the abnormality.

In a preferred embodiment of the present invention, the notification device further includes an output portion to output information on a display state of the display portion.

With this configuration, the notification device can output the information on the display state of the display portion to the outside.

The present invention provides a notification system including the notification device and a monitoring display device. The monitoring display device includes a receiving portion to receive information having been output by the output portion and a monitoring display portion to display information corresponding to the information which the receiving portion has received in synchronization with an indication by the notification device.

With this configuration, the information corresponding to the display state of the display portion of the notification device is displayed on the monitoring display portion of the monitoring display device in synchronization with the indication by the notification device. As a result, even a person in a place where he/she cannot visually recognize the notification device can grasp the content of what the notification device notifies, that is, for example, the occurrence of an abnormality and its details and the status of response to the abnormality, in real time by looking at the monitoring display portion.

The present invention provides a notification system including a plurality of the notification devices and another notification device. The other notification device includes a receiving portion to receive information output by the output portions of the plurality of notification devices and a display portion to display information corresponding to the information which the receiving portion has received.

With this configuration, information corresponding to the display state of the display portion of the notification device is displayed on the display portion of another notification device. As a result, for example, even a person in a place where he/she cannot visually recognize the notification device can grasp the content of what the notification device notifies, that is, the occurrence of an abnormality and its details and the status of response to the abnormality, by looking at the display portion of the other notification device.

### Brief Description of Drawings

FIG. 1 is a schematic perspective view for illustrating a notification device according to a preferred embodiment of the present invention and a mechanical device provided with this notification device.
FIG. 2 is a block diagram for illustrating an example of an electrical configuration of the notification device.
FIG. 3 is a diagram for illustrating a first example of a notification pattern of the notification device.
FIG. 4 is a diagram for illustrating a second example of the notification pattern of the notification device.
FIG. 5 is a diagram for illustrating a third example of the notification pattern of the notification device.
FIG. 6 is a diagram for illustrating a fourth example of the notification pattern of the notification device.
FIG. 7 is a schematic configuration diagram for illustrating a configuration example of a notification system including the notification devices.
FIG. 8 is a block diagram for illustrating an example of an electrical configuration of a monitoring display device constituting the notification system.
FIG. 9 is a block diagram for illustrating an example of an electrical configuration of another notification device constituting the notification system.

### Description of Embodiments

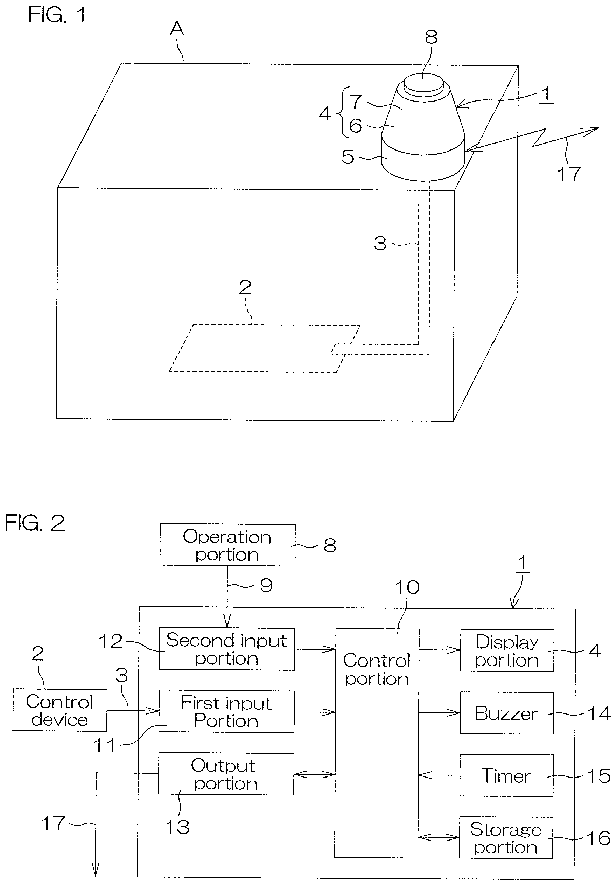

FIG. 1 is a schematic perspective view for illustrating a notification device 1 according to a preferred embodiment of the present invention and a mechanical device A provided with this notification device 1. The mechanical device A is installed, for example, at a production site of a factory. The notification device 1 is provided to the mechanical device A so that not only a person around the corresponding mechanical device A but also a person in a place far away from the mechanical device A at the production site can see the notification device 1. First information output from a control device 2 provided to the mechanical device A is input to the notification device 1 through a wired or wireless input signal line 3. The control device 2 may be a programmable logic controller (PLC) controlling the operation of the mechanical device A. The first information is a signal indicating that the mechanical device A is operating normally and indicating the occurrence of an abnormality of the mechanical device A and its details (for example, the occurrence of a failure, a shortage of parts, or other abnormalities).

The notification device 1 includes a display portion 4 to variably display information and a base portion 5 fixed in proper place in the mechanical device A and supporting the display portion 4. The display portion 4 includes a light source 6 and a tubular globe 7 covering the periphery of the light source 6. The light source 6 of this preferred embodiment is a light-emitting diode and selectively emits light of a plurality of colors. That is, the light source 6 is a full color light source or multi-color light source capable of emitting light of a plurality of colors. The notification device 1 may be a rotating warning light configured so that the light source 6 is rotatable. The globe 7 of this preferred embodiment is formed in a conical trapezoidal shape having a smaller diameter as the distance from the base portion 5 increases. The globe 7 of this preferred embodiment is colorless and transparent, or white translucent, and emits light having been emitted from the light source 6 to the outside in the same color. The emission color of the light source 6 becomes the display color of the display portion 4. The display state of the display portion 4 changes according to the first information input from the control device 2. Information corresponding to the first information is displayed on the display potion 4 with a first display attribute. The first display attribute in this preferred embodiment is the display color of the display portion 4. The base portion 5 is formed in a cylindrical shape having substantially the same diameter as the maximum diameter of the globe 7.

An operation portion 8 operated by an operator such as a worker in charge of maintenance at the production site is located around the notification device 1. The operation portion 8 is a switch in this preferred embodiment and is connected to the notification device 1 through a signal line 9 (see FIG. 2). As the switch, a capacitance type touch sensor can be used. In this preferred embodiment, the operation portion 8 is provided on a surface (a top surface in this preferred embodiment) of the globe 7 of the display portion 4 of the notification device 1 and thereby integrated with the notification device 1. However, the operation portion 8 may be configured by another device located in a position away from the notification device 1. Every time the operator presses (more specifically, touches) the operation portion 8, the operation portion 8 generates and inputs the second information to the notification device 1. One example of the second information is a pulse signal. The display state of the display portion 4 changes according to the second information input from the operation portion 8. Information corresponding to the second information is displayed on the display portion 4 with a second display attribute different from the first display attribute. The second display attribute in this preferred embodiment is a lighting pattern of the display portion 4.

FIG. 2 is a block diagram for illustrating an example of an electrical configuration of the notification device 1. The notification device 1 includes the above-described display portion 4, a control portion 10 configured by a CPU (Central Processing Unit), a first input portion 11 to which the first information from the control device 2 is input, a second input portion 12 to which the second information from the operation portion 8 is input. The notification device 1 includes an output portion 13 to output information on the display state of the display portion 4, a buzzer 14 housed, for example, in the base portion 5, a timer 15 to measure time, and a storage portion 16 to store information.

The first input portion 11 is an interface portion connected to the input signal line 3. The second input portion 12 is an interface portion connected to the signal line 9. The output portion 13 is an interface portion connected to a network 17 for communicating with an external device. The output portion 13 may be a communication interface using a connection technique such as an IO-Link. The control portion 10 controls the display portion 4 and the buzzer 14. The control portion 10 executes a processing with reference to the measured time of the timer 15 as needed.

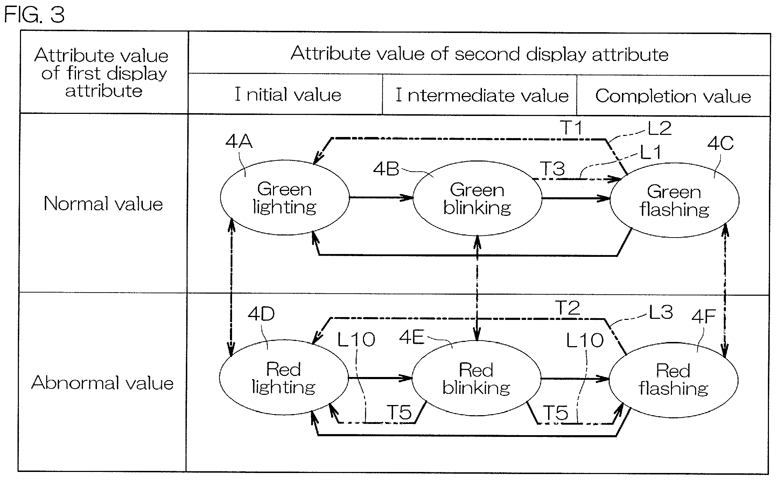

FIG. 3 is a diagram for illustrating a first example of a notification pattern of the notification device 1. In the storage portion 16, a relationship among the first information input from the control device 2, an attribute value of the first display attribute (hereinafter, referred to as "first display attribute value"), and the display color of the display portion 4 corresponding to the first display attribute value is stored. In this preferred embodiment, when the first information indicates normal operation of the mechanical device A, the first display attribute value is set to "normal value." The display color of the display portion 4 corresponding to the "normal value" is set to "green." On the other hand, when the first information indicates the occurrence of an abnormality of the mechanical device A, the first display attribute value is set to "abnormal value." The display color of the display portion 4 corresponding to the "abnormal value" is set to "red."

In the storage portion 16, a relationship between an attribute value of the second display attribute (hereinafter, referred to as "second display attribute value") and the lighting pattern of the display portion 4 corresponding to the second display attribute value is stored. The second display attribute value is set to values of "initial value," "intermediate value," and "completion value." In this preferred embodiment, the lighting pattern corresponding to the "initial value" is lighting (continuous lighting), and the lighting pattern corresponding to the "intermediate value" is blinking, and the lighting pattern corresponding to the "completion value" is flashing. The "blinking" means a lighting pattern periodically repeating a fixed short-time lighting and a fixed short-time extinguishing. The "flashing" means a lighting pattern periodically repeating a fixed extremely short-time lighting (a lighting for a shorter time than in the case of blinking) and a subsequent fixed short-time extinguishing (an extinguishing for a longer time than the lighting time).

The control portion 10 automatically changes the lighting pattern based on predefined conditions in addition to changing the display color of the display portion 4 according to the input of the first information and changing the lighting pattern of the display portion 4 according to the input of the second information. Specifically, when the second information is not input for a first time T1 (for example, 5 seconds) with the display portion 4 flashing in green, the control portion 10 automatically changes the lighting pattern to the lighting (continuous lighting). More specifically, when a state in which the first display attribute value is the normal value and the second display attribute value is the completion value continues for the first time T1, the control portion 10 changes the second display attribute value to the initial value.

When the second information is not input for a second time T2 (for example, 10 seconds) with the display portion 4 flashing in red, the control portion 10 automatically changes the lighting pattern to the lighting (continuous lighting). Specifically, when a state in which the first display attribute value is the abnormal value and the second display attribute value is the completion value continues for the second time T2, the control portion 10 changes the second display attribute value to the initial value.

When the second information is not input for a third time T3 (for example, 1 minute) with the display portion 4 blinking in green, the control portion 10 automatically changes the lighting pattern to flashing. Specifically, when a state in which the first display attribute value is the normal value and the second display attribute value is the intermediate value continues for the third time T3, the control portion 10 changes the second display attribute value to the completion value. The first time T1 (for example, 5 seconds), the second time T2 (for example, 10 seconds), and the third time T3 (for example, 1 minute) are preferably set to be longer in this order.

FIG. 3 indicates a change in the display state of the display portion 4 at the time when respective attribute values of the first display attribute and the second display attribute change. Thick solid line arrows in FIG. 3 indicate how the display state of the display portion 4 changes according to the operation of the operation portion 8 by the operator, that is, the input of the second information. When the operation portion 8 is operated so that the second information is input to the second input portion 12 at intervals exceeding a predetermined time (for example, 0.5 seconds), the control portion 10 cyclically changes the second display attribute value among the initial value, the intermediate value, and the completion value in this order. Thick one-dot chain line arrows in FIG. 3 indicate how the display state of the display portion 4 changes according to the content of the first information input from the control device 2. Thick two-dot chain line arrows in FIG. 3 indicate how the display state of the display portion 4 changes regardless of the operation of the operation portion 8 and the input of the first information. The display portion 4 can take six display states 4A to 4F in this example.

Upon input of the first information indicating the normal operation of the mechanical device A from the control device 2 to the first input portion 11, the control portion 10 sets the first display attribute value to the normal value and sets the emission color of the light source 6 of the display portion 4 to green. At this time, if the second display attribute value is the initial value, the display portion 4 enters a display state 4A of continuously lighting up in green by control of the control portion 10. In this state, when a worker comes to the mechanical device A for, for example, maintenance, and presses the operation portion 8 once prior to start of the maintenance, the second information is input to the second input portion 12. The control portion 10 then changes the second display attribute value from the initial value to the intermediate value. As a result, the display state of the display portion 4 changes from green lighting (the display state 4A) to a state of blinking in green and enters a display state 4B. A person who has seen the display state 4B can grasp that maintenance is currently being performed in the mechanical device A in the normal state.

When the worker completes the maintenance and presses the operation portion 8 once in the display state 4B in which the display portion 4 is blinking in green, the second information is input to the second input portion 12. The control portion 10 then changes the second display attribute value from the intermediate value to the completion value. As a result, the display state of the display portion 4 changes from green blinking (the display state 4B) to a state of flashing in green and enters a display state 4C. A person who has seen the display state 4C can grasp that the maintenance has been completed in the mechanical device A in the normal state.

When the worker presses the operation portion 8 once again in the display state 4C in which the display portion 4 is flashing in green, the second information is input to the second input portion 12. The control portion 10 then changes the second display attribute value from the completion value to the initial value. As a result, the display state of the display portion 4 changes from green flashing (the display state 4C) to continuous lighting in green and enters the display state 4A. A person who has seen the display state 4A can grasp that the mechanical device A is operating normally and maintenance etc., is not being performed.

The worker may leave the operation portion 8 unoperated in the display state 4B in which the display portion 4 is blinking in green. In that case, when a state in which the first display attribute value is the normal value and the second display attribute value is the intermediate value continues for the third time T3 (for example, 1 minute), the control portion 10 changes the second display attribute value from the intermediate value to the completion value (see the thick two-dot chain line L1). As a result, the display state of the display portion 4 changes from green blinking (the display state 4B) to green flashing and automatically transitions to the display state 4C. The third time T3 is an upper limit duration time of green blinking. The control portion 10 may change the second display attribute value from the intermediate value to the initial value and cause the display state of the display portion 4 to automatically transition from green blinking (the display state 4B) to green lighting (the display state 4A) instead of changing the second display attribute value from the intermediate value to the completion value.

The worker may leave the operation portion 8 unoperated in the display state 4C in which the display portion 4 is flashing in green. In that case, when a state in which the first display attribute value is the normal value and the second display attribute value is the completion value continues for the first time T1 (for example, 5 seconds), the control portion 10 changes the second display attribute value from the completion value to the initial value (see the thick two-dot chain line L2). As a result, the display state of the display portion 4 changes from green flashing (the display state 4C) to continuous lighting in green and automatically transitions to the display state 4A. The first time T1 is an upper limit duration time of green flashing.

Upon input of the first information indicating the occurrence of an abnormality in the mechanical device A from the control device 2 to the first input portion 11, the control portion 10 changes the first display attribute value from the normal value to the abnormal value. As a result, the display color of the display portion 4 is changed from green to red. At this time, if the second display attribute value is the initial value, the display portion 4 continuously lights up in red and enters a display state 4D by control of the control portion 10. In this state, the worker comes to the mechanical device A in order to eliminate the abnormality of the mechanical device A and presses the operation portion 8 once prior to starting work. By this pressing operation, the second information is input to the second input potion 12. The control portion 10 then changes the second display attribute value from the initial value to the intermediate value. As a result, the display state of the display portion 4 changes from red lighting (the display state 4D) to a state of blinking in red and transitions to a display state 4E. A person who has seen the display state 4E can grasp that the response is currently being performed in the mechanical device A in which the abnormality has occurred.

When the worker completes the work and presses the operation portion 8 once in the display state 4E in which the display portion is blinking in red, the second information is input to the second input portion 12. The control portion 10 then changes the second display attribute value from the intermediate value to the completion value. As a result, the display state of the display portion 4 changes from red blinking (the display state 4E) to a state of flashing in red and transitions to a display state 4F. A person who has seen the display state 4F can grasp that the response has been completed in the mechanical device A in which the abnormality has occurred.

When the first information indicating the normal operation of the mechanical device A is input from the control device 2 to the first input portion 11 by the abnormality being eliminated according to the response of the worker, the control portion 10 changes the first display attribute value from the abnormal value to the normal value. As a result, the display color of the display portion 4 changes from red to green. There may also be a case in which the abnormality is naturally eliminated in spite of the fact that the display portion 4 is during red lighting (the display state 4D) or red blinking (the display state 4E). In this case, upon input of the first information indicating the normal operation of the mechanical device A from the control device 2 to the first input portion 11, the control portion 10 changes the display state of the display portion 4 from red lighting (the display state 4D) or red blinking (the display state 4F) to green lighting (the display state 4A) or green blinking (the display state 4B). On the contrary, it also sometimes happens that the display state of the display portion 4 changes from green lighting, green blinking, or green flashing (the display state 4A, 4B, or 4C) to red lighting, red blinking, or red flashing (the display state 4D, 4E, or 4F) due to the occurrence of an abnormality.

The abnormality sometimes cannot be eliminated even if the worker responds. In that case, the worker presses the operation portion 8 once, for example, from the display state 4E to cause the display portion 4 to flash in red to be the display state 4F, and further presses the operation portion 8 once again. At this time, the control portion 10 changes the second display attribute value from the intermediate value to the initial value through the completion value according to the input of the second information to the second input portion 12. Accordingly, the display state of the display portion 4 changes from red blinking to red lighting through red flashing and enters the display state 4D. A person who has seen the display state 4D can grasp that the abnormality of the mechanical device A has not been eliminated.

The worker who has not been able to eliminate the abnormality may leave the display state 4F in which the display portion 4 is flashing in red. In that case, when a state in which the first display attribute value is the abnormal value and the second display attribute value is the completion value continues for the second time T2 (for example, 10 seconds), the control portion 10 changes the second display attribute value from the completion value to the initial value (see the thick two-dot chain line L3). As a result, the display state of the display portion 4 automatically transitions from red flashing (the display state 4F) to red lighting (the display state 4D). The second time T2 is an upper limit duration time of red flashing.

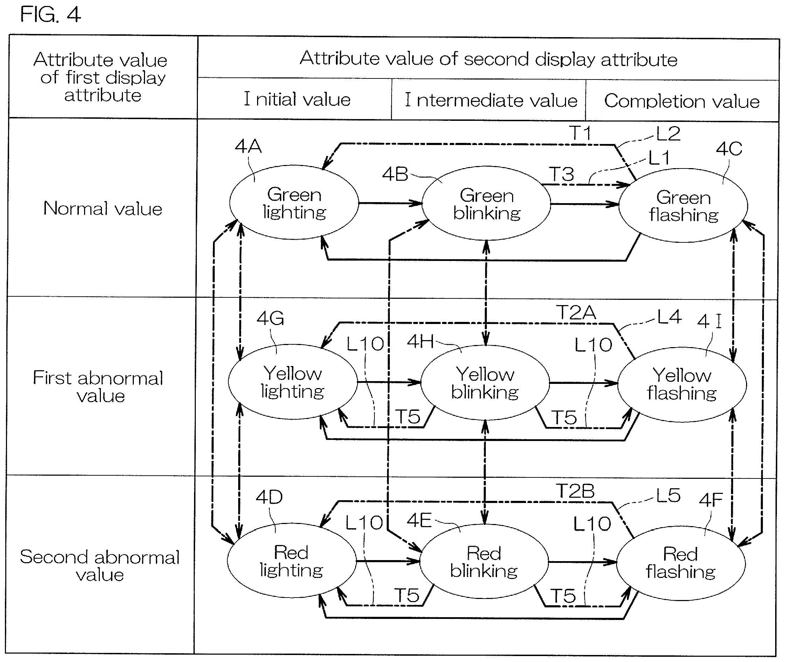

FIG. 4 is a diagram for illustrating a second example of the notification pattern of the notification device 1. Only differences from the first example will be described for the second example. A plurality of types may exist in abnormality of the mechanical device A. For example, when two types of abnormalities, that is, a first abnormality and a second abnormality different from the first abnormality can occur in the mechanical device A, the abnormal value includes a first abnormal value corresponding to the first abnormality and a second abnormal value corresponding to the second abnormality. The display color of the display portion 4 corresponding to the first abnormal value is set to a first abnormal color, for example, "yellow," and the display color of the display portion 4 corresponding to the second abnormal value is set to a second abnormal color, for example, "red," and these settings are stored in the storage portion 16 in advance. In this preferred embodiment, the second abnormality whose display color is red has a higher degree of urgency than the first abnormality whose display color is yellow. In this preferred embodiment, the display color of the display portion 4 has three types, so that the display portion 4 can take nine display states 4A to 41.

Upon input of the first information indicating the occurrence of the first abnormality in the mechanical device A from the control device 2 to the first input portion 11, the control portion 10 changes the first display attribute value from the normal value to the first abnormal value. As a result, the display color of the display portion 4 changes from green to yellow. At this time, if the second display attribute value is the initial value, the display portion 4 lights up in yellow and enters a display state 4G by control of the control portion 10. In this state, when the worker comes to the mechanical device A in order to respond to the first abnormality and presses the operation portion 8 once prior to starting work, the control portion 10 changes the second display attribute value from the initial value to the intermediate value. As a result, the display state of the display portion 4 changes from yellow lighting (the display state 4G) to a state of blinking in yellow and transitions to a display state 4H.

When the worker having completed the response to the first abnormality presses the operation portion 8 once, the control portion 10 changes the second display attribute value from the intermediate value to the completion value. As a result, the display state of the display portion 4 changes from yellow blinking (the display state 4H) to a state of flashing in yellow and transitions to a display state 41.

When the worker has not been able to eliminate the abnormality, the worker presses the operation portion 8 once in the display state 4I in which the display portion 4 is flashing in yellow. The control portion 10 then changes the second display attribute value from the completion value to the initial value, and changes the display state of the display portion 4 from yellow flashing (the display state 41) to continuous lighting in yellow to return the display state of the display portion 4 to the display state 4G.

The worker may leave the display state 4I in which the display portion 4 is flashing in yellow when the worker has not been able to eliminate the abnormality. In this case, when a state in which the first display attribute value is the first abnormal value and the second display attribute value is the completion value continues for a second A time T2A (for example, 10 seconds), the control portion 10 changes the second display attribute value from the completion value to the initial value. As a result, the display state of the display portion 4 changes from yellow flashing (the display state 41) to continuous lighting in yellow and automatically transitions to the display state 4G (see the thick two-dot chain line L4) .

Upon input of the first information indicating the normal operation of the mechanical device A from the control device 2 to the first input portion 11, the control portion 10 changes the first display attribute value from the first abnormal value to the normal value and changes the display color of the display portion 4 from yellow to green. That is, transitions are made from the display states 4G, 4H, and 4I to the respectively corresponding display states 4A, 4B, and 4C.

Upon input of the first information indicating the occurrence of the second abnormality in the mechanical device A from the control device 2 to the first input portion 11, the control portion 10 changes the first display attribute value from the normal value or the first abnormal value to the second abnormal value and changes the display color of the display portion 4 from green or yellow to red. That is, transitions are made from the display states 4A, 4B, and 4C or the display states 4G, 4H, and 4I to the respectively corresponding display states 4D, 4E, and 4F.

The change in the display state of the display portion 4 at the time when the display color of the display portion 4 is red is as described in the first example. Specifically, if the second display attribute value is the initial value when the display color of the display portion 4 is changed, the display portion 4 continuously lights up in red and enters the display state 4D by control of the control portion 10. When the worker comes to the mechanical device A in order to respond to the second abnormality and presses the operation portion 8 once prior to starting work in the display state 4D, the control portion 10 changes the second display attribute value from the initial value to the intermediate value. As a result, the display state of the display portion 4 changes from red lighting to the state of blinking in red and transitions to the display state 4E.

When the worker having completed the response to the second abnormality presses the operation portion 8 once, the control portion 10 changes the second display attribute from the intermediate value to the completion value, changes the display state of the display portion 4 from red blinking (the display state 4E) to the state of flashing in red, and causes the display state to transition to the display state 4F. When the worker has not been able to eliminate the abnormality, the worker presses the operation portion 8 once in the display state 4F in which the display portion 4 is flashing in red. The control portion 10 then changes the second display attribute value from the completion value to the initial value, changes the display state of the display portion 4 from red flashing (the display state 4F) to continuous lighting in red, and causes the display state to transition to the display state 4D.

The worker may leave the display state 4F as is even when the worker has not been able to eliminate the abnormality. Thus, when a state in which the first display attribute value is the second abnormal value and the second display attribute value is the completion value continues for a second B time T2B (for example, 10 seconds), the control portion 10 changes the second display attribute value from the completion value to the initial value. As a result, the display state of the display portion 4 changes from red flashing (the display state 4F) to continuous lighting in red and automatically transitions to the display state 4D (see the thick two-dot chain line L5) . The second B time T2B may be the same as the second A time T2A in the case of the first abnormality and may be shorter than the second A time T2A in response to the higher degree of urgency of the second abnormality.

Upon input of the first information indicating the normal operation of the mechanical device A from the control device 2 to the first input portion 11, the control portion 10 changes the first display attribute value from the second abnormal value to the normal value and changes the display color of the display portion 4 from red to green. That is, transitions are made from the red display states 4D, 4E, and 4F to the respectively corresponding green display states 4A, 4B, and 4C. Upon input of the first information indicating the occurrence of the first abnormality from the control device 2 to the first input portion 11, the control portion 10 changes the first display attribute value from the second abnormal value to the first abnormal value and changes the display color of the display portion 4 from red to yellow. That is, transitions are made from the red display states 4D, 4E, and 4F to the respectively corresponding yellow display states 4G, 4H, and 41.

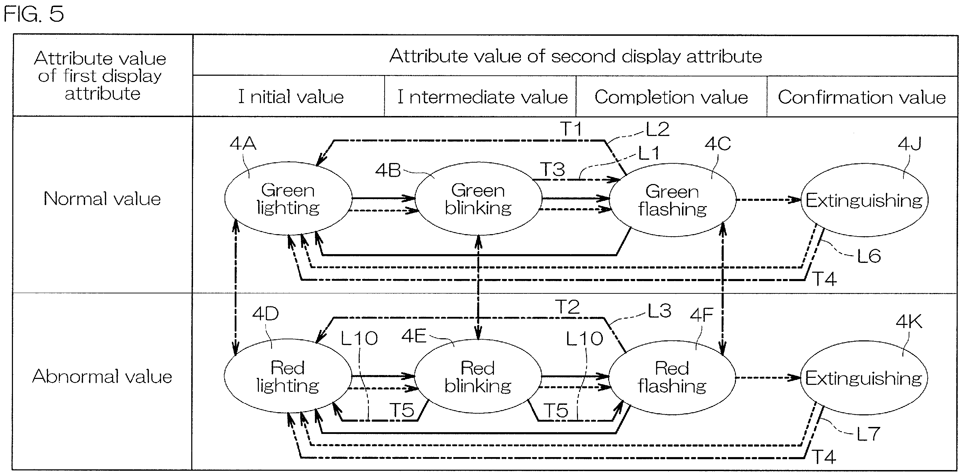

FIG. 5 is a diagram for illustrating a third example of the notification pattern of the notification device 1. Only differences from the first example will be described for the third example. The second display attribute value includes a confirmation value different from the initial value, the completion value, and the intermediate value. When the second display attribute value is the confirmation value, the control portion 10 controls the display portion 4 to be a non-display state. In this preferred embodiment, the non-display state is an extinguishing state (a continuous extinguishing state) . Since the second display attribute value can alternatively take four attribute values, the display portion 4 can take four display states for each display color (each attribute value of the first display attribute) . That is, the display portion 4 can take display states 4A, 4B, 4C, and 4J for green (the normal value) and can take display states 4D, 4E, 4F, and 4K for red (the abnormal value).

When the operation portion 8 is quickly continuously operated so that the second information is input to the second input portion 12 at intervals within the above-described predetermined time (for example, 0.5 seconds), the control portion 10 cyclically changes the second display attribute value among the initial value, the intermediate value, the completion value, and the confirmation value in this order. Such a quick continuous operation of the operation portion 8 is hereinafter simply referred to as "continuous operation." Thick broken line arrows in FIG. 5 indicate how the display state of the display portion 4 changes according to the continuous operation of the operation portion 8 by the operator.

When the operator repeats the continuous operation of the operation portion 8 with the first display attribute value being the normal value, the display state of the display portion 4 sequentially and cyclically switches to green lighting (display state 4A) corresponding to the initial value, green blinking (display state 4B) corresponding to the intermediate value, green flashing (display state 4C) corresponding to the completion value, and extinguishing (display state 4J) corresponding to the confirmation value. When the operator repeats the continuous operation of the operation portion 8 with the first display attribute value being the abnormal value, the display state of the display portion 4 sequentially and cyclically switches to red lighting (display state 4D) corresponding to the initial value, red blinking (display state 4E) corresponding to the intermediate value, red flashing (display state 4F) corresponding to the completion value, and extinguishing (display state 4K) corresponding to the confirmation value.

When a state in which the second display attribute value is the confirmation value continues for a fourth time T4 (for example, 10 seconds) regardless of whether the first display attribute value is the normal value or the abnormal value, the control portion 10 changes the second display attribute value from the confirmation value to the initial value. Therefore, when the first display attribute value is the normal value, the control portion 10 changes the second display attribute value from the confirmation value to the initial value according to the elapse of the fourth time T4, thereby changing the display state of the display portion 4 from the extinguishing (the display state 4J) to continuous lighting in green and causing the display state to automatically transition to the display state 4A (see the thick two-dot chain line L6) . When the first display attribute value is the abnormal value, the control portion 10 changes the second display attribute value from the confirmation value to the initial value according to the elapse of the fourth time T4, thereby changing the display state of the display portion 4 from the extinguishing (the display state 4K) to continuous lighting in red and causing the display state to automatically transition to the display state 4D (see the thick two-dot chain line L7).

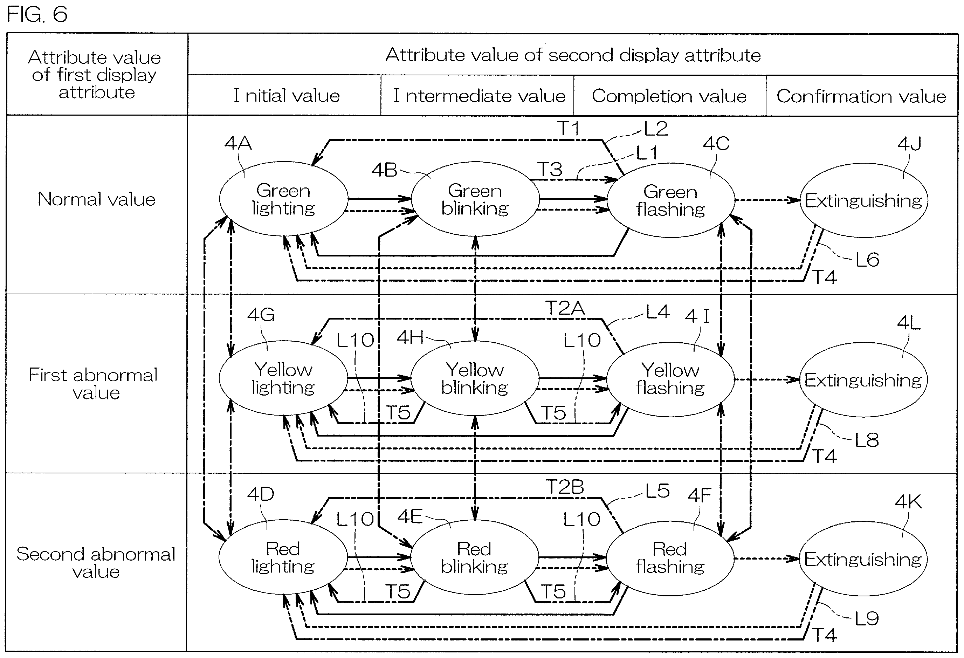

FIG. 6 is a diagram for illustrating a fourth example of the notification pattern of the notification device 1. Only differences from the first to third examples will be described for the fourth example. The fourth example assumes a case in which the first display attribute value includes a first abnormal value and a second abnormal value as in the second example and the second display attribute value includes a confirmation value as in the third example.

Since the second display attribute value can alternatively take four attribute values, the display portion 4 can take four display states for each display color (each attribute value of the first display attribute) . That is, the display portion 4 can take display states 4A, 4B, 4C, and 4J for green (the normal value), can take display states 4G, 4H, 41, and 4L for yellow (the first abnormal value), and can take display states 4D, 4E, 4F, and 4K for red (the second abnormal value) .

When the operator repeats the continuous operation of the operation portion 8 with the first display attribute value being the first abnormal value, the display state of the display portion 4 sequentially and cyclically switches to yellow lighting (display state 4G) corresponding to the initial value, yellow blinking (display state 4H) corresponding to the intermediate value, yellow flashing (display state 41) corresponding to the completion value, and extinguishing (display state 4L) corresponding to the confirmation value. When the operator repeats the continuous operation of the operation portion 8 with the first display attribute value being the second abnormal value, the display state of the display portion 4 sequentially and cyclically switches to red lighting (display state 4D) corresponding to the initial value, red blinking (display state 4E) corresponding to the intermediate value, red flashing (display state 4F) corresponding to the completion value, and extinguishing (display state 4K) corresponding to the confirmation value.

Similar to the third example, when a state in which the second display attribute value is the confirmation value continues for a fourth time T4 (for example, 10 seconds) regardless of whether the first display attribute value is the normal value, the first abnormal value, or the second abnormal value, the control portion 10 changes the second display attribute value from the confirmation value to the initial value. Therefore, when the first display attribute value is the first abnormal value, the control portion 10 changes the second display attribute value from the confirmation value to the initial value according to the elapse of the fourth time T4, thereby changing the display state of the display portion 4 from the extinguishing (the display state 4L) to continuous lighting in yellow and causing the display state to automatically transition to the display state 4G (see the thick two-dot chain line L8) . When the first display attribute value is the second abnormal value, the control portion 10 changes the second display attribute value from the confirmation value to the initial value according to the elapse of the fourth time T4, thereby changing the display state of the display portion 4 from the extinguishing (the display state 4K) to continuous lighting in red and causing the display state to automatically transition to the display state 4D (see the thick two-dot chain line L9).

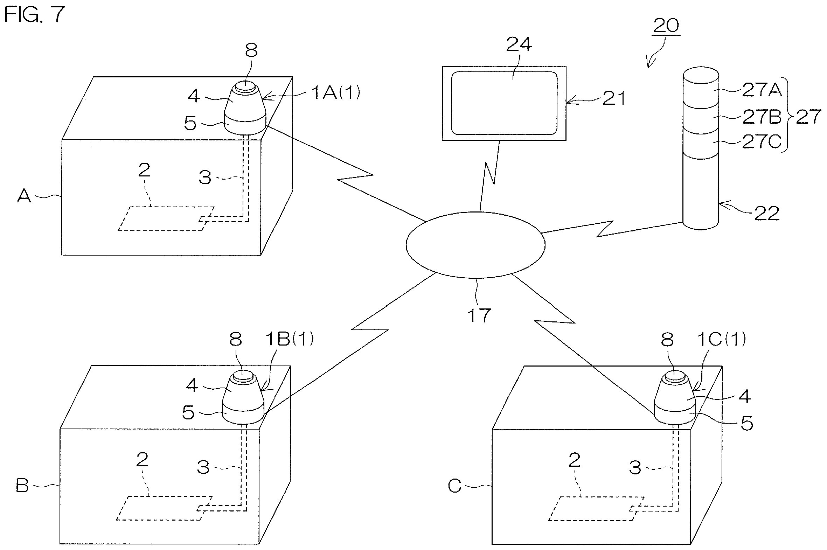

FIG. 7 is a schematic configuration diagram for illustrating a configuration example of a notification system 20 including the notification devices 1. The notification system 20 includes a plurality of notification devices 1, a monitoring display device 21, and another notification device 22. The plurality of notification devices 1 includes a notification device 1A corresponding to a mechanical device A, a notification device 1B corresponding to a mechanical device B, and a notification device 1C corresponding to a mechanical device C. Hereinafter, the mechanical devices A to C are simply referred to as "mechanical devices" when collectively referred to. The output portion 13 of each notification device 1 is commonly connected to the above-described network 17, and the monitoring display device 21 and the notification device 22 are also connected to the network 17. As the network 17, a communication line by means of a connection technique such as an IO-Link can be used. Typically, the monitoring display device 21 may be located in a position within eyeshot of a supervisor who manages the production site in a place away from the mechanical devices (the place may be outside the production site). The same applies to the notification device 22. The monitoring display device 21 and/or the notification device 22 may be located in a position near any mechanical device, and away from another mechanical device.

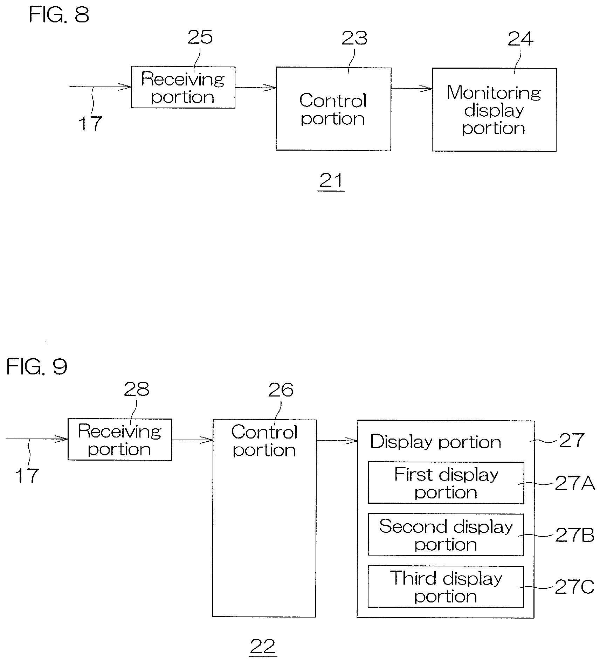

FIG. 8 is a block diagram for illustrating an example of an electrical configuration of the monitoring display device 21. The monitoring display device 21 includes a control portion 23 configured by a CPU, a monitoring display portion 24 configured by a monitor etc., and controlled by the control portion 23, and a receiving portion 25 to receive information having been output by the output portion 13 of each notification device 1. The receiving portion 25 is an interface portion connected to the network 17. The control portion 23 controls the monitoring display portion 24 to display information corresponding to the information which the receiving portion 25 has received from each notification device 1 in synchronization with an indication by each notification device 1. As a result, information corresponding to the display states of the display portions 4 of all notification devices 1 connected to the network 17 is displayed on the monitoring display portion 24 in real time.

FIG. 9 is a block diagram for illustrating an example of an electrical configuration of the notification device 22. The notification device 22 includes a control portion 26 configured by a CPU, a display portion 27 controlled by the control portion 26 and a receiving portion 28 to receive information having been output by the output portion 13 of each notification device 1. The output portion 13 of each notification device 1 outputs information indicating the display state (4A to 4L) of the display portion 4. The display portion 27 of the notification device 22 includes a first display portion 27A, a second display portion 27B, and a third display portion 27C (see FIG. 7). In this preferred embodiment, the notification device 22 has a form of a stacked signal light, and the plurality of display portions 27A, 27B, and 27C is combined in a stacked state to form a tower shape.

The control portion 26 controls the first display portion 27A to display information corresponding to the information which the receiving portion 28 has received from the notification device 1A. As a result, information corresponding to the display state of the display portion 4 of the notification device 1A is displayed on the first display portion 27A. The control portion 26 controls the second display portion 27B to display information corresponding to the information which the receiving portion 28 has received from the notification device 1B. As a result, information corresponding to the display state of the display portion 4 of the notification device 1B is displayed on the second display portion 27B. The control portion 26 controls the third display portion 27C to display information corresponding to the information which the receiving portion 28 has received from the notification device 1C. As a result, information corresponding to the display state of the display portion 4 of the notification device 1C is displayed on the third display portion 27C. The first, second, and third display portions 27A, 27B, and 27C may be controlled to assume display states respectively simulating the display states of the display portions 4 of the corresponding notification devices 1A, 1B, and 1C.

As just described, according to this preferred embodiment, the first information indicating the occurrence of an abnormality of the mechanical device to which the notification device 1 corresponds and the details of the abnormality is output from the control device 2 and input to the first input portion 11. The control portion 10 of the notification device 1 then controls the display portion 4 to display information corresponding to the first information with a first display attribute (a display color in this preferred embodiment) . As a result, a person who has seen the information displayed on the display portion 4 can grasp the occurrence of the abnormality and its details by the display color of the display portion 4. The operator having rushed in order to respond to the abnormality inputs the second information indicating his/her arrival to the second input portion 12 by operating the operation portion 8. The control portion 10 then controls the display portion 4 to display information corresponding to the second information with a second display attribute (a lighting pattern in this preferred embodiment) different from the first display attribute. As a result, a person(the above-described supervisor etc.) who has seen the information displayed on the display portion 4 can grasp, by the lighting pattern of the display portion 4, that the worker has arrived and started the response to the abnormality at the site. That is, a person who has seen the information displayed on the display portion 4 can grasp more additional information. From the above results, the notification device 1 can notify not only the occurrence of an abnormality and its details but also the status of response to the abnormality. As just described, the notification device 1 allows for an indication of more diverse information, and this can further improve the convenience. Consequently, the production site can be improved so that an immediate response can be performed when an abnormality occurs in the mechanical device. Further, waste of time and effort, such as another person also heading to the site in spite of the fact that someone has already headed to respond to the abnormality can be eliminated. Therefore, the operating efficiency of equipment and workers at the production site can be improved, and this leads to an improvement in productivity.

In particular, upon input of the first information indicating the occurrence of an abnormality in the mechanical device to the first input portion 11, the control portion 10 sets a first display attribute value to an abnormal value. As a result, information indicating the abnormal state (red in this preferred embodiment) is displayed on the display portion 4. Thus, a person who has seen the information displayed on the display portion 4 can grasp the occurrence of the abnormality and its details. On the other hand, upon input of the first information indicating that the mechanical device is normal to the first input portion 11, the control portion 10 sets the first display attribute value to a normal value. As a result, information indicating the normal state (green in this preferred embodiment) is displayed on the display portion 4. Thus, a person who has seen the information displayed on the display portion 4 can grasp that there exists no abnormality.

On the other hand, the control portion 10 sets a second display attribute value to an initial value. As a result, information indicating that no response to the mechanical device has been performed (green lighting or red lighting in this preferred embodiment) is displayed on the display portion 4. Thus, a person who has seen the information displayed on the display portion 4 can grasp that no response to the mechanical device is currently being performed. When a person who has completed any action on the mechanical device inputs the second information to the second input portion 12, the control portion 10 sets the second display attribute value to a completion value. As a result, information indicating that the response to the mechanical device has been completed (green flashing or red flashing in this preferred embodiment) is displayed on the display portion 4. As a result, a person who has seen the information displayed on the display portion 4 can grasp someone's contribution to the response to the mechanical device and the completion of the response to the mechanical device and its timing in a place away from the mechanical device.

When a state in which the first display attribute value is the normal value and the second display attribute value is the completion value continues for a first time T1, the control portion 10 changes the second display attribute value from the completion value to the initial value (see the above-described two-dot chain line L2). As a result, a person who has seen the information displayed on the display portion 4 during a period from the completion of the response to the mechanical device to the first time T1 can know that the action on the mechanical device has been appropriately taken and can confirm that a response is no longer required. The first time T1 is preferably set to have an appropriate length according to such a specific purpose.

When a response to the abnormality has been performed but a second time T2 continues without the abnormality being eliminated, the control portion 10 leaves the first display attribute value at the abnormal value and changes the second display attribute value from the completion value to the initial value (see the above-described two-dot chain line L3). As a result, that the response to the abnormality etc., has ended unsuccessfully can be notified during the second time, and that the abnormality is not eliminated yet can be notified thereafter. Therefore, the second time T2 is preferably set to have an appropriate length according to such a specific purpose.

Where there is a plurality of abnormalities of the above-described first abnormality and second abnormality, upon input of the first information indicating the occurrence of the first abnormality to the first input portion 11, the control portion 10 sets the first display attribute value to the first abnormal value, thereby displaying the information indicating the occurrence of the first abnormality on the display portion 4 (see the display state 4G). As a result, a person who has seen the information displayed on the display portion 4 can grasp the occurrence of the first abnormality. Upon input of the first information indicating the occurrence of the second abnormality to the first input portion 11, the control portion 10 sets the first display attribute value to the second abnormal value, thereby displaying the information indicating the occurrence of the second abnormality on the display portion 4 (see the display state 4D in FIG. 4 and FIG. 6). As a result, a person who has seen the information displayed on the display portion 4 can grasp the occurrence of the second abnormality. When the response to the first abnormality has been performed and the second display attribute value has become the completion value but the first abnormality has not been eliminated, the control portion 10 stands by for an elapse of a second A time T2A, leaves the first display attribute value at the first abnormal value, and changes the second display attribute value from the completion value to the initial value (see the above-described two-dot chain line L4) . As a result, that the response to the first abnormality has ended unsuccessfully can be displayed during the second A time T2A, and that the first abnormality is not eliminated yet can be displayed thereafter. Similarly, when the response to the second abnormality has been performed and the second display attribute value has become the completion value but the second abnormality has not been eliminated, the control portion 10 stands by for an elapse of a second B time T2B, leaves the first display attribute value at the second abnormal value, and changes the second display attribute value from the completion value to the initial value (see the above-described two-dot chain line L5). As a result, that the response to the second abnormality has ended unsuccessfully can be displayed during the second B time T2B, and that the second abnormality is not eliminated yet can be displayed thereafter. In this manner, the type of abnormality and the status of response thereto can be displayed.

The control portion 10 changes the second display attribute value from the initial value to the intermediate value, from the intermediate value to the completion value, and from the completion value to the initial value by the second information being repeatedly input to the second input portion 12. That is, the second display attribute value cyclically changes in order of the initial value, the intermediate value, and the completion value in response to the input of the second information. Since the second display attribute fluctuates accordingly, the second information can be displayed in three types of modes . The control portion 10 can display information indicating that a response to the mechanical device has been started on the display portion 4 by setting the second display attribute value to the intermediate value. In this case, if the second display attribute value is the initial value at the time when an abnormality has occurred in the mechanical device, a person who has seen the information displayed on the display portion 4 can grasp that no response to the abnormality has been performed (see the display states 4D and 4G). When an operator such as a worker in charge inputs the second information to the second input portion 12, the second display attribute value changes from the initial value to the intermediate value. Therefore, a person who has seen the information displayed on the display portion 4 can grasp the start of a response to the abnormality and its timing (see the display states 4E and 4H). When the person who has completed the response to the abnormality inputs the second information to the second input portion 12, the second display attribute value changes from the intermediate value to the completion value. Therefore, a person who has seen the information displayed on the display portion 4 can grasp that the response to the abnormality has been completed (see the display states 4F and 4I). When the person etc., who has completed the response to the abnormality inputs the second information to the second input portion 12, the second display attribute value changes from the completion value to the initial value. Therefore, a person who has seen the information displayed on the display portion 4 can grasp that no response to the mechanical device is currently being performed. There may be a case in which a worker in charge starts to take action for the abnormality of the mechanical device but the action ends unsuccessfully. In such a case, the worker in charge returns the second display attribute value to the initial value by an input of the second information. This allows the notification device 1 to notify that an action on the abnormality is required.

When a worker inputs the second information to the second input portion 12, for example, at the time of starting maintenance of the mechanical device, the second display attribute value changes from the initial value to the intermediate value. Even if the worker having completed the action does not input the second information to the second input portion 12, the control portion 10 changes the second display attribute value from the intermediate value to the completion value (see the above-described two-dot chain line L1) when a state in which the attribute value of the first display attribute is the normal value continues for a third time T3. As a result, that the action is being taken can be displayed during the third time T3, and that the maintenance of the mechanical device has been completed can be displayed thereafter.

When the second information is input to the second input portion 12 at intervals exceeding a predetermined time, the control portion 10 sequentially and cyclically changes the second display attribute value among the initial value, the intermediate value, and the completion value (see solid line arrows in FIG. 3 to FIG. 6). On the other hand, when the second information is input to the second input portion 12 at intervals within the predetermined time, the control portion 10 sequentially and cyclically changes the second display attribute value among the initial value, the intermediate value, the completion value, and a confirmation value (see broken line arrows in FIG. 5 and FIG. 6). When the second display attribute value is changed to the confirmation value, the display portion 4 enters a non-display state.

For example, when an abnormality occurs in the mechanical device, a worker in charge inputs the second information to the second input portion 12 at the time of starting the action. Then, the second display attribute value changes from the initial value to the intermediate value. When the worker completes the action and inputs the second information to the second input portion 12 again, the second display attribute value changes from the intermediate value to the completion value. In this manner, the status of response to the abnormality of the mechanical device can be displayed by the attribute value of the second display attribute.

The worker having started the action may not be able to eliminate the abnormality of the mechanical device. In this case, the attribute value of the second display attribute is preferably returned to the initial value. This is because this allows for notifying that the action on the abnormality of the mechanical device is not completed yet. In such a case, the worker can change the second display attribute value to the initial value by inputting the second information to the second input portion 12. The second display attribute value can be set to the initial value by repeatedly inputting the second information to the second input portion 12. At that time, the attribute value of the second display attribute is returned to the initial value through the confirmation value by executing the input of the second information at intervals within the predetermined time. Since the display portion assumes the non-display state when the attribute value of the second display attribute is the confirmation value, the operator can know that the attribute value of the second display attribute can be set to the initial value by inputting the second information next. That is, the attribute value of the second display attribute can be confirmed by the non-display state of the display portion.

When the display portion 4 is in the non-display state, the control portion 10 changes the second display attribute value from the confirmation value to the initial value according to an elapse of a fourth time T4 even if the second information is not input to the second input portion 12 (see the above-described two-dot chain lines L6 to L9) . As a result, the information according to the initial value is displayed on the display portion 4. This can prevent the non-display state from continuing for a long time.

In the notification system 20, the information corresponding to the display state of the display portion 4 of the notification device 1 is displayed on the monitoring display portion 24 of the monitoring display device 21 in synchronization with the indication by the notification device 1 (see FIG. 7). As a result, for example even a person in a place where he/she cannot visually recognize the notification device 1 can grasp the content of what the notification device 1 notifies, that is, the occurrence of abnormality and its details and the status of response to the abnormality, in real time by looking at the monitoring display portion 24.

In the notification system 20, the information corresponding to the display state of the display portion 4 of each notification device 1 is displayed on the display portion 27 of another notification device 22 (see FIG. 7). As a result, for example even a person in a place where he/she cannot visually recognize the notification device 1 can grasp the content of what each notification device 1 notifies, that is, the occurrence of abnormality and its details and the status of response to the abnormality, by looking at the display portion 27 of another notification device 22.

As described above, the preferred embodiments of the present invention have been described. However, the present invention can be carried out in further other forms.
(1) For example, the notification device 1 may be a stacked signal light similar to the notification device 22. In that case, the notification device 1 includes a plurality of display portions 4 stacked. In this case, the first display attribute may be at least one of the display color and the display position (the stacked position of each display portion 4) of the plurality of display portions 4. Thus, the display position may be made different in addition to or instead of making the display color different as described above according to when the first display attribute value is the normal value and when the first display attribute value is the abnormal value.
(2) In the notification system 20, either the monitoring display device 21 or the notification device 22 may be omitted.
(3) The worker responding to the abnormality may leave the mechanical device halfway through the response. Thus, when a state in which the first display attribute value is the abnormal value and the second display attribute value is the intermediate value continues for a fifth time T5 (for example, 10 to 20 minutes), the control portion 10 may automatically change the second display attribute value from the intermediate value to the initial value or the completion value (see the thick two-dot chain line L10 in FIG. 3 to FIG. 6) . The above-described first time T1 (for example, 5 seconds), second time T2 (for example, 10 seconds), third time T3 (for example, 1 minute), and fifth time T5 are preferably set to be longer in this order. The above-described fourth time T4 and second time T2 (second A time T2A and second B time T2B) may have the same length.

While preferred embodiments of the present invention are described in detail above, these are merely specific examples used to clarify the technical contents of the present invention. The present invention should not be interpreted as being limited to these specific examples and the scope of the present invention is limited only by the appended claims.

### Reference Signs List

- 1:: Notification device
- 1A:: Notification device
- 1B:: Notification device
- 1C:: Notification device
- 2:: Control device
- 4:: Display portion
- 8:: Operation portion
- 10:: Control portion
- 11:: First input portion
- 12:: Second input portion
- 13:: Output portion
- 20:: Notification system
- 21:: Monitoring display device
- 22:: Another notification device
- 24:: Monitoring display portion
- 25:: Receiving portion
- 27:: Display portion
- 28:: Receiving portion
- A:: Mechanical device
- B:: Mechanical device
- C:: Mechanical device
- T1:: First time
- T2:: Second time
- T2A:: Second A time
- T2B:: Second B time
- T3:: Third time
- T4:: Fourth time

## Claims

1. A notification device comprising:
a first input portion to which first information is input;
a second input portion to which second information is input;
a display portion to variably display information; and
a control portion to control the display portion to display information corresponding to the first information with a first display attribute and to display information corresponding to the second information with a second display attribute different from the first display attribute.

2. The notification device according to Claim 1, wherein
the control portion sets an attribute value of the first display attribute to a normal value or an abnormal value according to an input of the first information to the first input portion, and
the control portion sets an attribute value of the second display attribute to an initial value or a completion value according to an input of the second information to the second input portion, and
when a state in which the attribute value of the first display attribute is the normal value and the attribute value of the second display attribute is the completion value continues for a first time, the control portion changes the attribute value of the second display attribute from the completion value to the initial value.

3. The notification device according to Claim 2, wherein when a state in which the attribute value of the first display attribute is the abnormal value and the attribute value of the second display attribute is the completion value continues for a second time, the control portion changes the attribute value of the second display attribute from the completion value to the initial value.

4. The notification device according to Claim 3, wherein
the abnormal value includes a first abnormal value and a second abnormal value, and
the second time includes a second A time according to the first abnormal value and a second B time according to the second abnormal value, and
when a state in which the attribute value of the first display attribute is the first abnormal value and the attribute value of the second display attribute is the completion value continues for the second A time, the control portion changes the attribute value of the second display attribute from the completion value to the initial value, and
when a state in which the attribute value of the first display attribute is the second abnormal value and the attribute value of the second display attribute is the completion value continues for the second B time, the control portion changes the attribute value of the second display attribute from the completion value to the initial value.

5. The notification device according to any one of Claims 2 to 4, wherein
the attribute value of the second display attribute includes an intermediate value different from the initial value and the completion value, and
when the second information is input to the second input portion with the attribute value of the second display attribute being the initial value, the control portion changes the attribute value of the second display attribute from the initial value to the intermediate value, and
when the second information is input to the second input portion with the attribute value of the second display attribute being the intermediate value, the control portion changes the attribute value of the second display attribute from the intermediate value to the completion value, and
when the second information is input to the second input portion with the attribute value of the second display attribute being the completion value, the control portion changes the attribute value of the second display attribute from the completion value to the initial value.

6. The notification device according to Claim 5, wherein when a state in which the attribute value of the first display attribute is the normal value and the attribute value of the second display attribute is the intermediate value continues for a third time, the control portion changes the attribute value of the second display attribute from the intermediate value to the completion value.

7. The notification device according to Claim 5 or Claim 6, wherein
the attribute value of the second display attribute includes a confirmation value different from the initial value, the completion value, and the intermediate value, and
when the attribute value of the second display attribute is the confirmation value, the control portion controls the display portion to be a non-display state, and
when the second information is input to the second input portion at intervals exceeding a predetermined time, the control portion sequentially changes the attribute value of the second display attribute among the initial value, the intermediate value, and the completion value, and
when the second information is input to the second input portion at intervals within the predetermined time, the control portion sequentially changes the attribute value of the second display attribute among the initial value, the intermediate value, the completion value, and the confirmation value.

8. The notification device according to Claim 7, wherein when a state in which the attribute value of the second display attribute is the confirmation value continues for a fourth time, the control portion changes the attribute value of the second display attribute from the confirmation value to the initial value.

9. The notification device according to any one of Claims 1 to 8, wherein
the first display attribute is at least one of a display color and a display position, and
the second display attribute is a lighting pattern.

10. The notification device according to any one of Claims 1 to 9, wherein
the first information is information output from a control device controlling a mechanical device to which the notification device corresponds, and
the second information is information input to the second input portion by an operation of an operation portion by an operator.

11. The notification device according to any one of Claims 1 to 10, further comprising an output portion to output information on a display state of the display portion.

12. A notification system comprising:
the notification device according to Claim 11; and
a monitoring display device comprising a receiving portion to receive the information output by the output portion and a monitoring display portion to display information corresponding to the information which the receiving portion has received in synchronization with an indication by the notification device.

13. A notification system comprising:
a plurality of the notification devices according to Claim 11; and
another notification device comprising a receiving portion to receive the information output by the output portions of a plurality of the notification devices and a display portion to display information corresponding to the information which the receiving portion has received.
